# EUROPEAN PATENT APPLICATION

(11) **EP 3 254 802 A1**
(43) Date of publication of application: **13.12.2017**
(21) Application number: 17171572.5
(22) Date of filing: 17.05.2017
(51) Int. Cl.: B23Q 3/10

(54) **SUPPORTING FIXTURE FOR FITTING/REMOVING A COMPONENT FORCED IN A CORRESPONDING SEAT**

(30) Priority: 20.05.2016 DE 202016102715 U
(71) Applicant: Govoni S.r.l., 40014 Crevalcore (BO) (IT)
(72) Inventor: VERRILLO, Davide, 41051 CASTELNUOVO RANGONE MO (IT); VERRILLO, Antonio, 40017 SAN GIOVANNI IN PERSICETO BO (IT); MITRATI, Marco, 40017 SAN GIOVANNI IN PERSICETO BO (IT)
(74) Representative: Modiano, Micaela Nadia

(57) **Abstract**

A supporting fixture (1) for fitting/removing a component forced in a corresponding seat, which comprises a base plate (2) provided with a plurality of holes (3) at which it is possible to associate alternately at least three supporting pins (4) and means (5) for the reversible connection of each one of the supporting pins (4) to a corresponding hole (3); the means (5) for reversible connection of each one of the supporting pins (4) comprise first means (6) for adjusting the position of the pin on the horizontal plane and second means (7) for adjusting its position in a vertical direction.

## Description

The present invention relates to a supporting fixture for fitting/removing a component forced in a corresponding seat.

In the field of car repair shop work, various types of intervention are known which require the fitting and/or removal of mechanical components, such as bushes, sleeve bearings and roller bearings, which are forced with interference into corresponding seats formed on an additional component. For example, in order to replace the innerhub that supports the bearing from the hub bracket or replace the bearing from the hub, depending on the shape of the car model on which the intervention is to be performed, it is known to insert the parts to be uncoupled under a press and then reinsert the replaced part in its seat, again with the aid of a press.

It is noted that in this kind of work the hub or hub bracket are subjected to intense downward thrusts and therefore, during work at the press the parts involved must be supported appropriately so as to remain stably stationary during the execution of the intervention and avoid the occurrence of unwanted yielding or displacements.

For this purpose it is known to provide supporting elements constituted by blocks having various shapes and dimensions, to be composed depending on the geometry of the elements to be supported.

However, this operating mode, in addition to requiring significant setup times, is not allowed to work in adequate safety conditions, entailing risks for operators, who might be struck by elements that have been displaced accidentally, or damage to the elements on which the intervention is being performed.

As an alternative, in order to reduce the execution times of the intervention and increase the level of safety for operators, supporting fixtures are known which are constituted essentially by a base plate provided with a plurality of threaded holes in which it is possible to screw alternately three threaded supporting pins on which the element being worked at the press is rested.

The position of the pins is defined as a function of the geometry of the element to be supported and so is the depth of the screwing of the pins in the corresponding hole.

In order to facilitate the flexibility of use of these fixtures, some versions are known in which one of the supporting pins is coupled to an additional plate, which also bears a plurality of threaded holes and is associated with the base plate by means of a connecting screw that is inserted along a contoured slot. When the screw is loosened, the additional plate can be moved with respect to the base plate by rotating it with respect to the screw or translating it along the slot.

However, even these types of known fixture are not free from drawbacks, which include the fact that the possible positions of at least two of the supporting pins on the horizontal plane are in any case constrained to the distribution of the holes on the base plate and the possibility of adjustment in a vertical direction is also limited by the length of said pins.

Moreover, adjustment in a vertical direction requires a certain time, since it is necessary to screw or unscrew the pins in/from the corresponding hole by a desired extent.

The aim of the present invention is to eliminate the drawbacks described above of the background art by providing a supporting fixture for fitting/removing a component forced in a corresponding seat which allows increase its flexibility of use as the geometry of the elements to be supported varies, extending the range of the possible placements of the supporting elements both on the horizontal plane and in a vertical direction.

Within this aim, an object of the present invention is to reduce the setup time of the fixture as the three-dimensional geometry of the element to be supported varies.

Another object of the present invention is to ensure reliability and safety, so as to avoid the risk of injury for operators and damage to the elements being worked.

Another object of the present invention is to have a structure that is simple, relatively easy to provide in practice, safe in use and effective in operation, as well as relatively modest in cost.

This aim and these and other objects that will become more apparent hereinafter, are all achieved by the present supporting fixture for fitting/removing a component forced in a corresponding seat, which comprises a base plate provided with a plurality of holes at which it is possible to associate alternately at least three supporting pins and means for the reversible connection of each one of said supporting pins to a corresponding hole, characterized in that the means for reversible connection of each one of said supporting pins comprise first means for adjusting the position of said pin on the horizontal plane and second means for adjusting its position in a vertical direction.

Further characteristics and advantages of the present invention will become better apparent from the detailed description of two preferred but not exclusive embodiments of a supporting fixture for fitting/removing a component forced in a corresponding seat, illustrated by way of nonlimiting example in the accompanying drawings, wherein:
Figure 1 is a perspective view of a first embodiment of a supporting fixture for fitting/removing a component forced in a corresponding seat, according to the invention, used in the working of a hub bracket;
Figure 2 is a view similar to Figure 1, with the hub bracket raised from the fixture according to the invention;

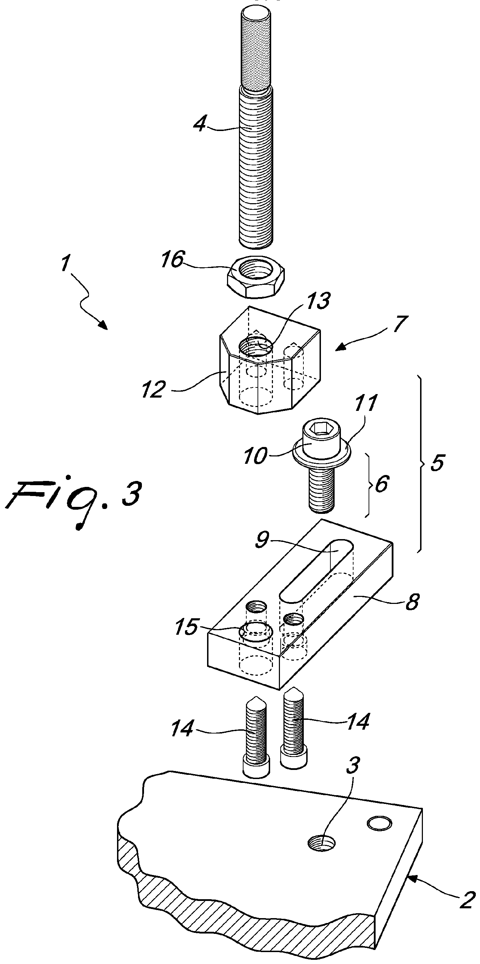

Figure 3 is an exploded perspective view of a portion of the fixture of Figure 1 related to the means for reversible connection of a supporting pin;

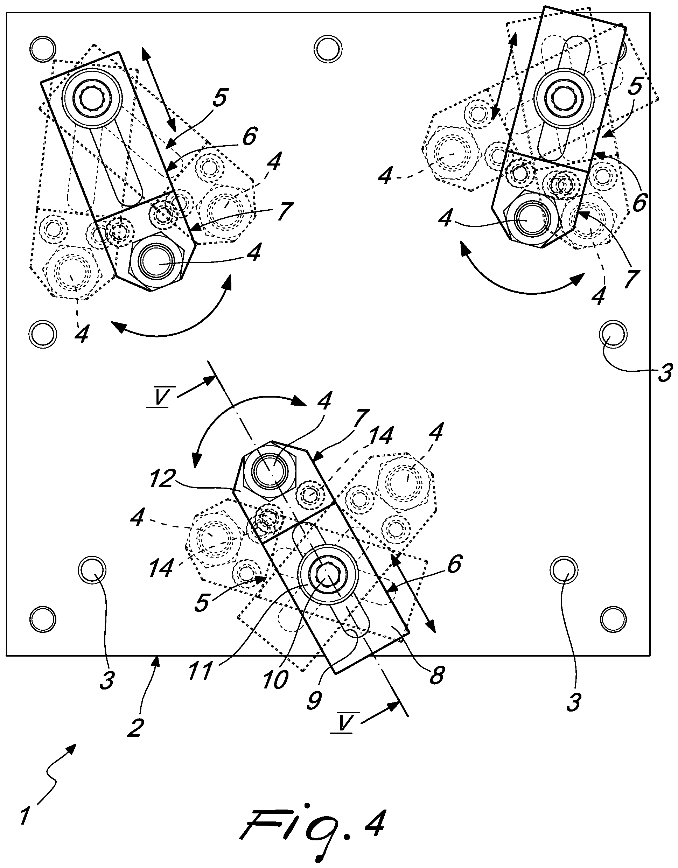

Figure 4 is a plan view of the fixture of Figure 1, showing the various possibilities of adjustment of the position on the horizontal plane of the supporting pins;

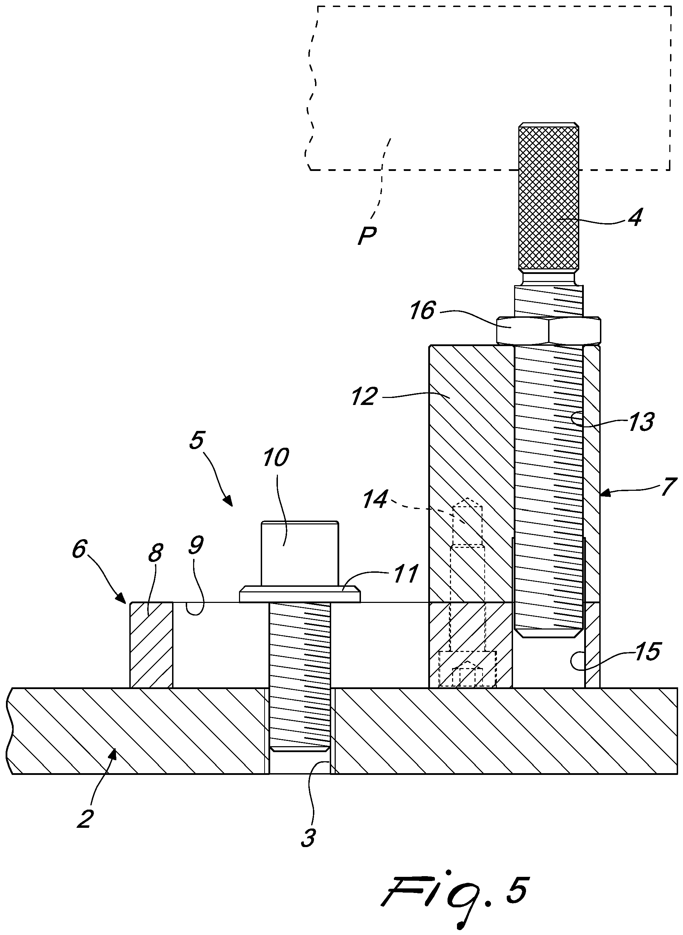

Figure 5 is a sectional view, taken along the plane V-V of Figure 4;
Figure 6 is a partially exploded perspective view of a second embodiment of the fixture according to the invention.

With particular reference to the figures, the reference numeral 1 generally designates a supporting fixture for fitting/removing a component forced in a corresponding seat.

The fixture 1 comprises a base plate 2, which generally has a quadrangular shape and is provided with a plurality of holes 3 at which it is possible to associate alternatively at least three supporting pins 4 and means 5 for the reversible connection of each one of the pins 4 to the corresponding hole 3.

The holes 3 are distributed along a peripheral region of the base plate 2.

The holes 3 at which the pins 4 are to be engaged are selected by the assigned operators on the basis of the geometry of the elements to be supported, which are placed so as to rest on the upper ends of said pins.

The means 5 for the connection of each pin 4 comprise first means 6 for adjusting the position of said pin on the horizontal plane and second means 7 for adjusting its position in a vertical direction.

In greater detail, the first adjustment means 6 comprise a bracket 8 for supporting the corresponding pin 4 which is provided with a slot 9 in which an element 10 for connection to the corresponding hole 3 of the base plate 2 is inserted so as to pass through it.

When the connecting element 10 is not inserted completely in the corresponding hole 3, the bracket 8, which supports the corresponding pin 4 and is arranged so as to rest on the base plate 2, can rotate about the connecting element 10 or can be translated with respect to its along the slot 9 and can assume multiple positions on the horizontal plane.

In the illustrated embodiment the slot 9 has a linear shape, but it is not excluded that it might be shaped differently.

Preferably, the connecting element 10 is of the threaded type and the holes 3 also are internally threaded. Each connecting element 10 is constituted by a bolt the stem of which is engaged in the corresponding hole 3, which is coupled to a washer 11 which is arranged between the head of the bolt and the bracket 8 which rests on the peripheral region of the slot 9.

When it is screwed completely into the corresponding hole 3, the bolt 10 clamps the bracket 8 so as to lock it with respect to the base plate 2. By loosening the bolt 10, the degrees of freedom of the bracket 8 with respect to the base plate 2 are restored.

The second adjustment means 7 comprise at least one spacer 12 of appropriate thickness, which is interposed in a vertical direction between the bracket 8 and the corresponding pin 4.

The spacer 12 is provided in an upper region with a corresponding seat 13 which is threaded internally for coupling to the pin 4, which is threaded externally at least at its lower end. In this manner, by screwing/unscrewing the pin 4 it is possible to adjust the coupling depth of said pin in the corresponding seat 13 in order to modify the height at which its upper end is arranged as a function of the geometry of the elements to be supported. A locking nut 16 for locking the pivot 4 in the desired position is provided.

The seat 13 can pass through the spacer 12 and can be extended into a recess 15 that is formed in the bracket 8 in order to extend the possibility to adjust the position of the pin 4 in a vertical direction.

Advantageously, the second adjustment means 7 can have two or more spacers 12 of different thicknesses adapted to be used alternatively, so as to obtain different arrangements in a vertical direction of the upper end of the pin 4 as a function of the geometry of the element to be supported.

During use, the spacer 12 is connected to the bracket 8 by means of a pair of screws 14 that pass through it and are engaged in the base of said spacer.

By varying the position of the brackets 8 with respect to the base plate 2, the height of the spacers 12 in use, and the depth of the coupling of the pins 4 in the corresponding spacers it is possible to modify the configuration of the fixture 1 as a function of the geometry of the element to be supported that is being worked.

It is also optionally possible to provide brackets 8 with slots 9 of different length or shape and pins 4 of different lengths in order to further increase the flexibility of use of the fixture 1.

The fixture 1 can be provided in an assembly kit, providing a plurality of spacers 12 of different thickness for each pin 4 to be used alternatively.

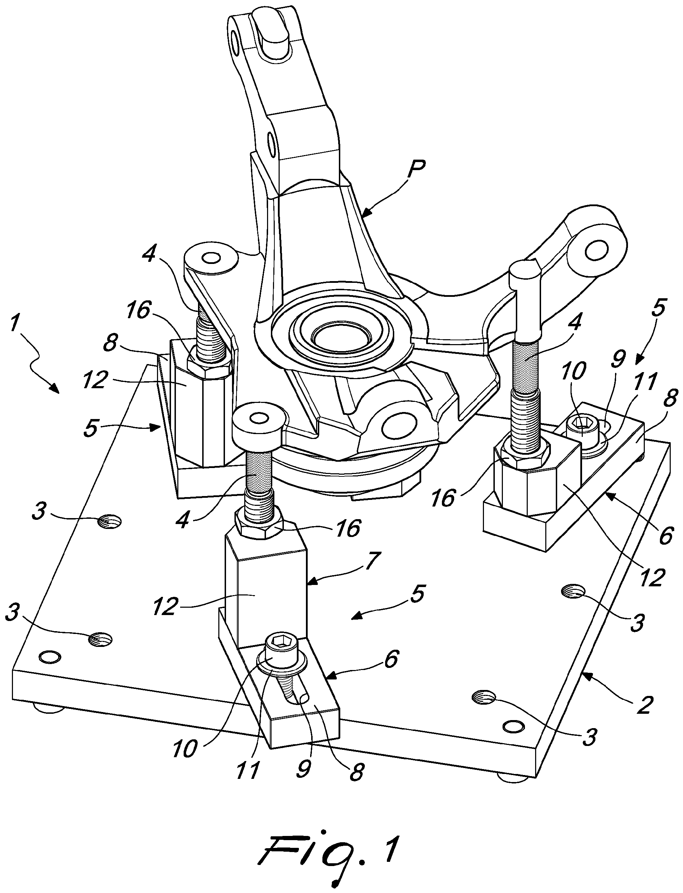

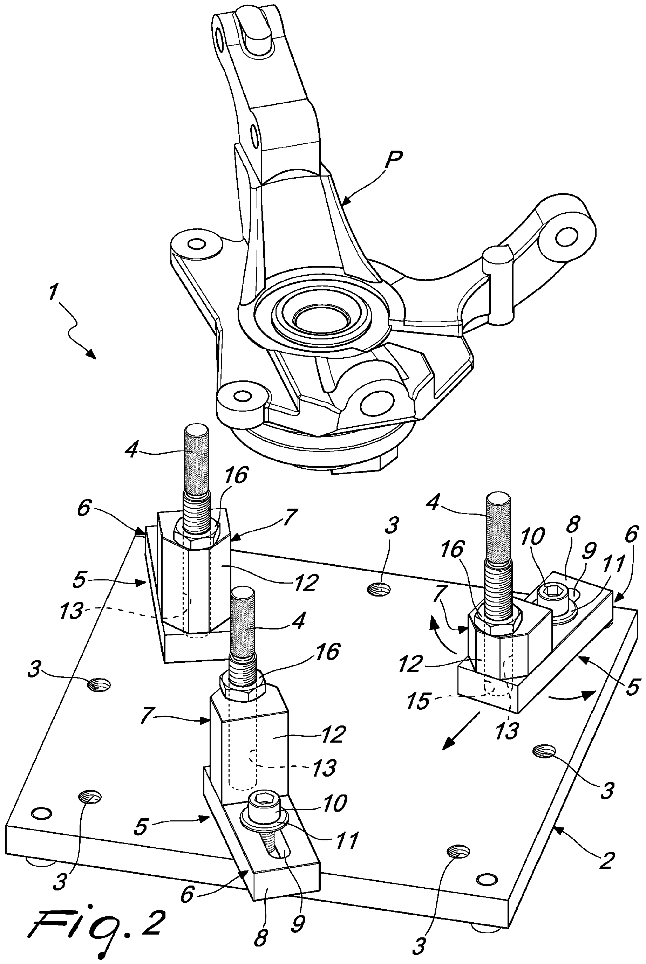

For example, as shown in Figures 1 and 2, the fixture 1 can be used to support a hub or hub bracket P being worked at the press in order to insert or remove the bearing in or from the corresponding seat, arranging the pins 4 in appropriate grip points provided on the hub or on the hub bracket itself.

The fixture 1 therefore can be adapted also to rather irregular geometric shapes of the hub and hub bracket.

Other uses of the fixture 1 for supporting an element provided with a seat in which it is necessary to force, or from which it is necessary to remove, a mechanical component, such as a bush, a sleeve bearing or a rolling bearing, are in any case possible.

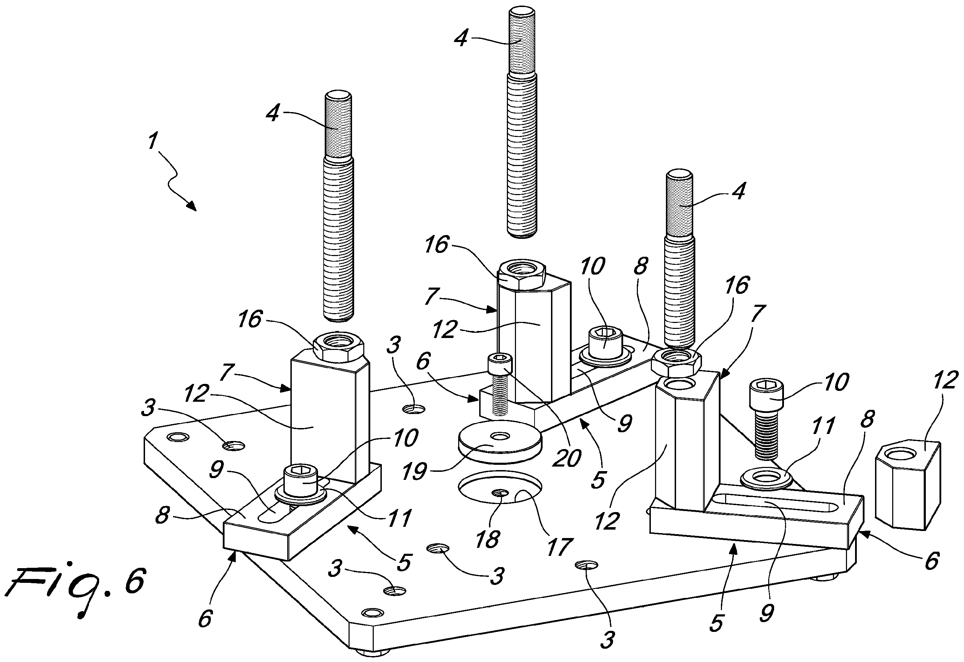

For example, in a variation shown in Figure 6 the fixture 1 has the base plate 2 provided in an upper region, in a central position, with a circular slot 17 that has a threaded hole 18 at its center. A circular disk 19 is accommodated within the slot 17 and is provided with a through hole for the insertion of a screw 20 that is engaged in the threaded hole 18.

In this manner the slot 17 allows to center auxiliary fixtures, such as a kit for the mounting/removal of silent blocks of a known type (not shown), so as to further increase the flexibility of use of the fixture 1, which can be used in association with said auxiliary fixtures for the execution of particular interventions.

In practice it has been found that the described invention achieves the proposed aims and objects and in particular the fact is stressed that the fixture according to the invention can be adapted to any geometric shape of an element to be supported, being substantially universal in use.

Furthermore, the fixture according to the invention also facilitates and speeds up the adjustment of the position in a vertical direction of the supporting elements.

Not least, the fixture according to the invention allows to support in a stable and reliable manner the elements being worked, in order to avoid risks for the operators and damages to the parts being worked.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to the requirements without thereby abandoning the protective scope of the claims that follow.

The disclosures in German Utility Model Application No. 202016102715.2 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A supporting fixture (1) for fitting/removing a component forced in a corresponding seat, comprising a base plate (2) provided with a plurality of holes (3) at which it is possible to associate alternately at least three supporting pins (4) and means (5) for the reversible connection of each one of said supporting pins (4) to a corresponding hole (3), **characterized in that** the means (5) for reversible connection of each one of said supporting pins (4) comprise first means (6) for adjusting the position of said pin on the horizontal plane and second means (7) for adjusting its position in a vertical direction.

2. The fixture (1) according to claim 1, **characterized in that** said first adjustment means (6) comprise a bracket (8) for supporting the corresponding supporting pin (4), which is provided with a slot (9) in which an element (10) for connection to the corresponding hole (3) of said base plate (2) is inserted so as to pass through, when the connecting element (10) is not completely inserted in the corresponding hole (3) the bracket (8) being movable by rotation and translation along the slot (9) with respect to it.

3. The fixture (1) according to claim 2, **characterized in that** said connecting element (10) is of the threaded type and **in that** said holes (3) are internally threaded.

4. The fixture (1) according to claim 2, **characterized in that** said second adjustment means (7) comprise at least one spacer (12) interposed between said bracket (8) and the corresponding supporting pin (4).

5. The fixture (1) according to claim 4, **characterized in that** said at least one spacer (12) is provided in an upper region with a corresponding internally threaded seat (13), the corresponding supporting pin (4) being threaded externally for coupling to said seat and the coupling depth of each supporting pin (4) in the corresponding seat (13) being adjustable.

6. The fixture (1) according to claim 4, **characterized in that** said second adjustment means (7) comprise at least two of said spacers (12) which have different thicknesses and are adapted to be interposed alternately between said bracket (8) and the corresponding supporting pin (4).

7. The fixture (1) according to claim 1, **characterized in that** said holes (3) are distributed along a peripheral region of said base plate (2).

8. The fixture (1) according to claim 1, **characterized in that** said base plate (2) is provided in an upper region with a slot (17) for the centering of auxiliary fixtures.

9. A supporting kit for fitting/removing a component forced in a corresponding seat, **characterized in that** it comprises a fixture (1) according to one or more of the preceding claims and a plurality of said spacers (12) having a different thickness and alternately usable as a function of the geometry of the element to be supported.
